# FASCICULE DE BREVET EUROPEEN

(11) **EP 0 837 256 B1**
(45) Date de publication et mention de la délivrance du brevet: **23.07.2003**
(21) Numéro de dépôt: 97402270.9
(22) Date de dépôt: 29.09.1997
(51) Int. Cl.: F16B 37/04

(54) **Ecrou à montage par clippage sur un profilé**
Klammermutter für Profile
Clip nut for profiles

(30) Priorité: 16.10.1996 FR 9612636
(43) Date de publication de la demande: 22.04.1998
(73) Titulaire: RAPID S.A., F-75852 Paris Cédex 17 (FR)
(72) Inventeur: Leon, Jean-Pierre, 78800 Houilles (FR)
(74) Mandataire: Bentz, Jean-Paul

(56) Documents cités:
- FR-A- 2 468 784
- FR-A- 2 636 687
- US-A- 4 146 074

## Description

La présente invention a essentiellement pour objet un écrou encagé à montage par clippage sur un profilé en forme de U ou analogue selon le préambule de la revendication 1.

Un écrou de ce type est décrit dans le document FR 2 468 784.

Cet écrou présente l'inconvénient de nécessiter pour son montage dans le profilé un outil spécifique tel qu'un tournevis.

L'invention a pour but de proposer un écrou qui ne présente pas cet inconvénient.

Pour atteindre ce but, l'écrou selon l'invention comporte les caractéristiques énoncées dans la partie caractérisante de la revendication 1.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue éclatée en perspective d'un écrou encagé conforme à l'invention, et également d'un profilé en U sur lequel peut être monté par clippage cet écrou encagé.

La figure 2 est une vue en perspective de l'écrou encagé seul, l'écrou étant montré en position retenue dans sa cage.

La figure 3 est une vue en plan de dessus de l'écrou encagé positionné dans l'ouverture d'un profilé en U et prêt à être monté par clippage sur ce profilé.

La figure 4 est une vue en bout du profilé, suivant la flèche IV de la figure 3.

La figure 5 est une vue similaire à la figure 3, mais montrant l'écrou encagé en position montée et clippée dans le profilé.

La figure 6 est une vue en bout du profilé suivant la flèche VI de la figure 5.

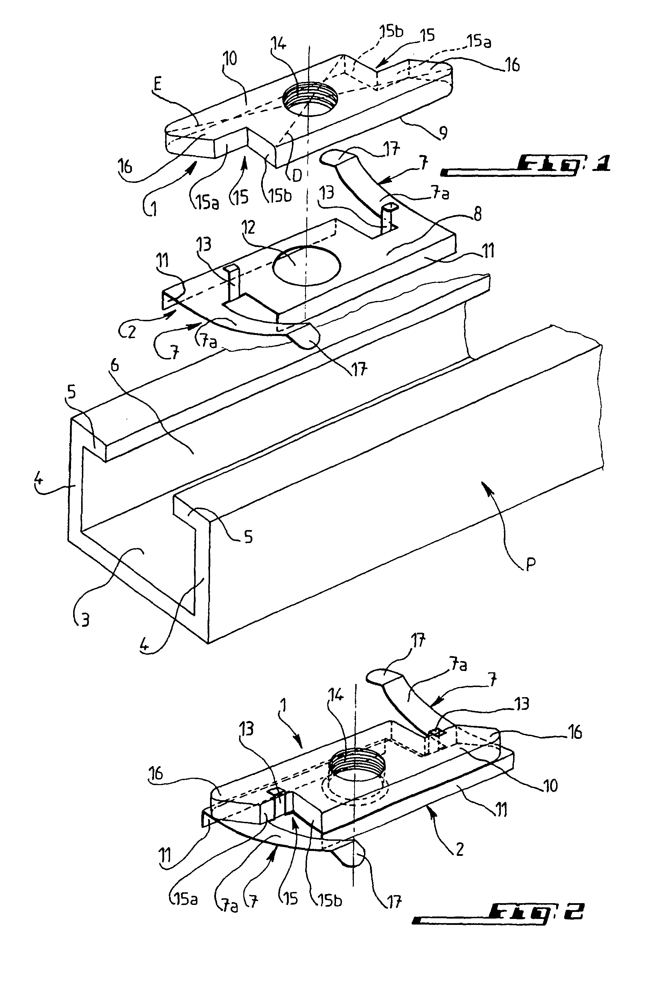

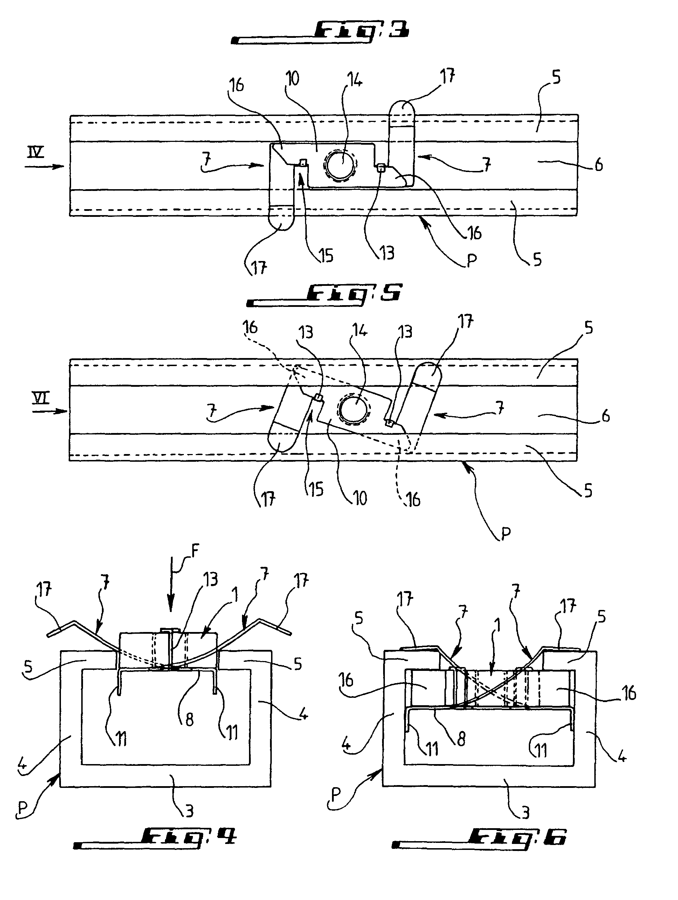

On voit sur les figures 1 et 2 un écrou encagé comprenant un écrou proprement dit 1 solidaire d'une cage 2 et destiné à être monté par clippage dans un élément en forme de canal ouvert constitué, suivant l'exemple représenté, par un profilé P sensiblement en forme de U.

Ce profilé P, qui peut être en un matériau quelconque, comporte une embase 3 à partir de laquelle s'étendent deux branches ou ailes 4 dont les extrémités libres se terminent par deux bords 5 tournés vers l'intérieur du U du profilé P de façon à délimiter une ouverture 6 s'étendant suivant l'axe dudit profilé et dans laquelle pourra être retenu l'écrou encagé.

Conformément à l'invention, cet écrou encagé comporte deux pattes opposées arquées et déformables 7 qui s'étendent depuis la cage 2 suivant respectivement deux directions qui sont sensiblement parallèles et opposées, comme on le voit bien sur les figures 1 et 2.

La cage 2 est réalisée à partir d'une feuille de métal découpée et comprend un fond 8 qui est plaqué contre l'une des faces de l'écrou, à savoir sa face inférieure 9. Les deux pattes arquées 7 prennent racine depuis le fond 8 de la cage et présentent chacune une concavité 7a tournée du côté de l'autre face de l'écrou, à savoir sa face supérieure 10.

Suivant l'exemple représenté, la cage 2 comporte des bords repliés 11 raidissant le fond 8, un orifice 12 pour le passage d'une vis (non représentée), et deux pattes découpées et repliées depuis le fond 8 de la cage 2 pour constituer des griffes 13 permettant l'accrochage de ladite cage sur l'écrou 1, plus précisément sur la face supérieure 10 de cet écrou.

Comme il apparaît clairement sur la figure 1, l'écrou 1 comporte un orifice taraudé 14 ainsi que, sur deux côtés opposés, un redan ou analogue 15 permettant le débattement élastique des pattes arquées 7 et laissant le passage aux griffes 13 d'accrochage de la cage 2 sur l'écrou 1.

Chaque redan 15 de l'écrou 1 est formé par une découpe en forme de L, bien visible sur les figures, dans les deux côtés opposés précités de l'écrou 1, cette découpe étant effectuée suivant sensiblement une diagonale D dudit écrou.

Les deux côtés opposés de l'écrou comportant les redans 15 comportent encore une partie biseautée 16, suivant l'autre diagonale E de l'écrou 1, ces deux parties biseautées 16 constituant chacune, en quelque sorte, le prolongement de l'une 15a des deux branches 15a, 15b du L constituant chaque redan 15. Ces parties biseautées 16 sont destinées à coopérer avec les bords 5 de l'ouverture 6 du profilé P pour y retenir l'écrou encagé, comme on le décrira en détail plus loin.

L'extrémité libre de chaque patte arquée 7 comporte un repliement 17 bien visible sur les figures et susceptible de venir en appui élastique sur les bords 5 du profilé P.

Mais, pour une meilleure compréhension de l'invention, on expliquera ci-après comment s'effectue le montage par clippage de l'écrou encagé qui vient d'être décrit en se reportant plus particulièrement aux figures 3 à 6.

Tout d'abord, comme on le voit sur les figures 3 et 4, l'écrou encagé est positionné dans l'ouverture 6 du profilé P, les pattes arquées 7 en appui sur les bords 5 du profilé P empêchant ledit écrou encagé de tomber à l'intérieur du profilé.

Puis, en exerçant avec le doigt une pression sur la face supérieure 10 de l'écrou 1, suivant la flèche F visible sur la figure 4, les pattes arquées et opposées 7 de la cage 2 fléchissent et provoquent automatiquement, à la pénétration de l'écrou encagé dans le profilé P entre les bords 5, la rotation de l'écrou encagé qui prendra la position visible sur les figures 5 et 6. Plus précisément, lorsque l'écrou 1 aura, sous l'effet de la pression avec le doigt, franchi l'épaisseur que représentent les bords 5 du profilé P, la rotation de l'écrou encagé s'effectuera grâce aux pattes arquées et de direction opposée 7 réagissant sur les bords 5 du profilé P, de sorte que finalement les parties biseautées 16 de l'écrou 1 seront retenues sous les bords 5 du profilé P, comme on le voit bien sur la figure 5, et cela en butant sur les ailes 4 dudit profilé.

L'écrou encagé ainsi positionné et maintenu dans le profilé P pourra être utilisé pour fixer un élément quelconque par vissage sur ledit profilé. Le couple de vissage sera encaissé par les parties biseautées 16 en butée sur les ailes 4 du profilé P.

Il est à noter qu'une fois engagé dans le profilé, comme on le voit sur la figure 5, l'écrou encagé pourra être avantageusement déplacé légèrement vers la gauche ou vers la droite pour obtenir un positionnement précis, et cela par simple pression avec le doigt sur l'écrou 1, ce qui permettra en quelque sorte de dégager les parties biseautées 16 des bords 5 pour permettre le glissement de l'écrou encagé dans le profilé P. A cet égard, l'écrou encagé pourra aussi, de cette façon, être extrait du profilé en le faisant glisser jusqu'à l'une des extrémités de celui-ci.

On a donc réalisé suivant l'invention un écrou encagé à montage par simple clippage dans l'ouverture d'un profilé en U, et cela par simple introduction par pression de l'écrou encagé dans l'ouverture de ce profilé pour assurer simultanément la rotation de cet écrou encagé dans ladite ouverture afin qu'il y soit retenu.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Ecrou encagé à montage par clippage sur un profilé ou analogue (P) sensiblement en forme d'un U comportant une ouverture définie entre les bords de deux ailes libres orientées l'une vers l'autre, du type comprenant un écrou (1) ayant une largeur inférieure à la largeur de ladite ouverture pour permettre l'introduction de l'écrou dans le profilé à travers ladite ouverture et une longueur supérieure à la largeur pour permettre la retenue de l'écrou dans le profilé après une rotation suite à l'introduction de l'écrou dans le profilé et une cage (2) comportant une portion (8) formant fond de retenue de l'écrou et deux portions (7) de part et d'autre du fond (8), destinées à être appliquées sur les ailes du U lorsque l'écrou est monté à l'intérieur du profilé sous lesdites ailes, **caractérisé en ce que** les portions (7) d'application sur lesdites ailes sont formées par deux pattes arquées et élastiquement déformables (7) qui s'étendent depuis la cage (2) suivant deux directions sensiblement parallèles et opposées, que les deux pattes arquées (7) prennent naissance depuis le fond (8) de la cage (2) appliquée contre l'une (9) des faces (9, 10) de l'écrou (1) et présentent chacune une concavité (7a) tournée du côté de l'autre face (10) de l'écrou, pour permettre l'introduction par pression de l'écrou encagé dans l'ouverture (6) du U du profilé (P) et simultanément la rotation de l'écrou encagé dans ladite ouverture pour l'y retenir.

2. Ecrou encagé selon la revendication 1, **caractérisé en ce que** l'écrou (1) repose sur le fond (8) de la cage par sa face opposée à celle venant en appui sous les ailes du profilé et est maintenu sur ce fond par des éléments en forme de griffe (13).

3. Ecrou encagé selon l'une des revendications 1 ou 2, **caractérisé en ce que** l'écrou proprement dit (1) comporte sur deux côtés opposés un redan ou analogue (15) permettant le débattement élastique des pattes arquées (7).

4. Ecrou encagé selon l'une des revendications 1 à 3, **caractérisé en ce que** l'extrémité libre de chaque patte (7) comporte un repliement (17) venant en appui sur les bords (5) de l'ouverture (6) du profilé (P).

5. Ecrou encagé selon l'une des revendications 1 à 3, **caractérisé par** au moins deux griffes repliées (13) prenant naissances depuis le fond (8) de la cage (2) et passant respectivement dans les redans précités (15) pour s'accrocher sur l'autre face précitée (10) de l'écrou (1), afin d'assurer la retenue de l'écrou dans sa cage (2).

6. Ecrou encagé selon la revendication 3, **caractérisé en ce que** les redans précités (15) sont formés par une découpe en forme de (L) effectuée dans les deux côtés opposés précités de l'écrou et suivant une diagonale (D) de celui-ci-, l'une (15a) des deux branches (15a, 15b) de chaque L coopérant avec les bords (5) de l'ouverture (6) du profilé (P) pour y retenir l'écrou.

7. Ecrou encagé selon la revendication 6, **caractérisé en ce que** la branche précitée (15a) de chaque L est biseautée (16).

## Patentansprüche

1. Einsteckmutter zur Befestigung, durch Klammerung, an ein Profil oder ähnliches (P), das im Wesentlichen U-förmig ist und eine Öffnung aufweist, die zwischen den Rändern von zwei freien Flügeln gebildet wird, die einander zugewandt sind, des Typs, der eine Mutter (1) umfasst, deren Breite kleiner ist als die Breite dieser Öffnung, um die Einführung der Mutter in das Profil durch diese Öffnung zu gestatten, und eine Länge, die größer ist als die Breite, um die Befestigung der Mutter im Profil nach einer Drehung zu gestatten, nachdem die Mutter in das Profil und in eine Halterung (2) eingeführt wurde, die einen Abschnitt (8) aufweist, der einen Befestigungssockel der Mutter bildet, und zwei Abschnitte (7) beiderseits des Sockels (8), die vorgesehen sind, um auf den Flügeln des U aufzuliegen, wenn die Mutter im Inneren des Profils unter diesen Flügeln eingebaut ist, **dadurch gekennzeichnet, dass** die Abschnitte (7) zur Auflage auf diesen Flügeln aus zwei gekrümmten und elastisch verformbaren Laschen bestehen, die von der Halterung (2) aus in zwei Richtungen verlaufen, die im Wesentlichen parallel und entgegen gesetzt sind, dass die zwei gekrümmten Laschen (7) vom Sockel (8) der Halterung (2) aus abgehen, der gegen eine (9) der Flächen (9, 10) der Mutter (1) anliegt, und jeweils eine Höhlung (7a) aufweisen, die der anderen Fläche (10) der Mutter zugewandt ist, um die Einführung, durch Druck, der Einsteckmutter in die Öffnung (6) des U des Profils (P) und die gleichzeitige Drehung der Einsteckmutter in dieser Öffnung zu erlauben, damit diese dort befestigt wird.

2. Einsteckmutter nach Anspruch 1, **dadurch gekennzeichnet, dass** die Mutter (1) mit ihrer Fläche, die der gegenüberliegt, die unter den Flügeln des Profils anliegt, auf dem Sockel (8) der Halterung ruht und durch krallenförmige Elemente (13) an diesen Sockel befestigt wird.

3. Einsteckmutter nach einem der Ansprüche 1 oder 2, **dadurch gekennzeichnet, dass** die eigentliche Mutter (1) an zwei gegenüberliegenden Seiten eine Abtreppung oder ähnliches (15) aufweist, die den elastischen Ausschlag der gekrümmten Laschen (7) zulässt.

4. Einsteckmutter nach einem der Ansprüche 1 bis 3, **dadurch gekennzeichnet, dass** das freie Ende jeder Lasche (7) einen Knick (17) aufweist, der auf den Rändern (5) der Öffnung (6) des Profils (P) aufliegt.

5. Einsteckmutter nach einem der Ansprüche 1 bis 3, **dadurch gekennzeichnet, dass** mindestens zwei geknickte Krallen (13) vom Sockel (8) der Halterung (2) aus abgehen und jeweils die obigen Abstufungen (15) umgreifen, um sich an der obigen anderen Fläche (10) der Mutter (1) festzuklammern, um die Befestigung der Mutter in ihrer Halterung (2) zu gewährleisten.

6. Einsteckmutter nach Anspruch 3, **dadurch gekennzeichnet, dass** die obigen Abstufungen (15) durch einen L-förmigen Ausschnitt gebildet werden, der an beiden obigen entgegen gesetzten Seiten der Mutter vorgesehen ist, und einer Diagonale (D) von dieser entsprechend, wobei einer (15a) der zwei Arme (15a, 15b) jedes L mit den Rändern (5) der Öffnung (6) des Profils (P) zusammenwirkt, um die Mutter daran zu befestigen.

7. Einsteckmutter nach Anspruch 6, **dadurch gekennzeichnet, dass** der obige Arm (15a) jedes L abgekantet ist (16).

## Claims

1. A captive nut which is joined by clipping to a substantially U-shaped section or the like (P) which comprises a defined opening between the edges, which are oriented towards each other, of two free legs, of the type comprising a nut (1) having a width less than the width of said opening to enable the nut to be introduced into the section through said opening, and having a length greater than its width to enable the nut to be retained in the section after a rotation following the introduction of the nut into the section, and having a retainer (2) comprising a portion (8) forming a retaining base for the nut and two portions (7) on both sides of the base (8) which are intended to be applied to the legs of the U when the nut is mounted in the interior of the section under said legs, **characterised in that** the portions (7) for application to said legs are formed by two elastically deformable, arcuate lugs which extend from the retainer (2) in two opposite, substantially parallel directions, that the two arcuate lugs (7) originate from the base (8) of the retainer (2) which is applied against one (9) of the faces (9, 10) of the nut (1), and each comprise a concavity (7a) facing in the direction of the other face (10) of the nut to permit the captive nut to be introduced by pressure into the opening (6) of the U of the section (P) and simultaneously to permit the rotation of the captive nut in said opening in order to retain it there.

2. A captive nut according to claim 1, **characterised in that** the nut (1) rests on the base (8) of the retainer on its opposite face to that which bears on the legs of the section, and is maintained on said base by claw-shaped elements (13).

3. A captive nut according to either one of claims 1 or 2, **characterised in that** the nut itself (1) comprises a step or the like (15) on two opposite sides which permits the elastic deflection of the arcuate lugs (7).

4. A captive nut according to any one of claims 1 to 3, **characterised in that** the free end of each lug (7) comprises a fold (17) which bears against the edges (5) of the opening (6) in the section (P).

5. A captive nut according to any one of claims 1 to 3, **characterised by** at least two folded claws (13) which originate from the base (8) of the retainer (2) and which extend into the respective aforementioned steps (15) so as to hook on to the aforementioned other face (10) of the nut (1) in order to ensure that the nut is retained its retainer (2).

6. A captive nut according to claim 3, **characterised in that** the aforementioned steps (15) are formed by an (L)-shaped cut in the aforementioned two opposite sides of the nut along a diagonal (P) of the latter, one (15a) of the two limbs (15a, 15b) of each L cooperating with the edges (5) of the opening (6) in the section (P) in order to retain the nut there.

7. A captive nut according to claim 6, **characterised in that** the aforementioned limb (15a) of each L is bevelled (16).
